(19) Europäisches Patentamt
European Patent Office
Office européen des brevets

(11) **EP 4 403 332 A1**

(12) **EUROPEAN PATENT APPLICATION**
published in accordance with Art. 153(4) EPC

(43) Date of publication:
**24.07.2024 Bulletin 2024/30**

(21) Application number: **22869643.1**

(22) Date of filing: **06.06.2022**

(51) International Patent Classification (IPC):
**B29C 45/76** (2006.01)

(52) Cooperative Patent Classification (CPC):
**B29C 45/76**

(86) International application number:
**PCT/JP2022/022706**

(87) International publication number:
**WO 2023/042494 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2021 JP 2021151214**

(71) Applicant: **The Japan Steel Works, Ltd.
Tokyo 141-0032 (JP)**

(72) Inventors:
• **YASUDA, Hisashi
Tokyo 141-0032 (JP)**
• **MITANI, Soma
Tokyo 141-0032 (JP)**

(74) Representative: **Simmons & Simmons LLP
(Munich)
Lehel Carré
Thierschplatz 6
80538 Munich (DE)**

(54) **LIFE ESTIMATION METHOD, LIFE ESTIMATION DEVICE, AND COMPUTER PROGRAM**

(57) In the present invention, physical amount data which indicates the state of a prescribed part constituting an industrial machine is acquired, the acquired physical amount data and time data which indicates the time of acquisition of the physical amount data are associated and stored, a function for estimating the change over time of a parameter value correlated to the life of the prescribed part is calculated on the basis of the physical amount data and the time data, and the calculated function is used to calculate a breakdown timing and a breakdown probability for the prescribed part.

FIG.6

EP 4 403 332 A1

## Description

[Technical Field]

The present invention relates to a life estimation method, a life estimation device, and a computer program.

[Background Art]

An injection molding machine includes an injection device that melts and injects a molding material and a mold clamping device. The injection device includes a heating cylinder that has a nozzle at its tip and a screw that is provided in the heating cylinder to be rotatable in a circumferential direction and an axial direction. The screw is driven in a rotational direction and the axial direction by a driving mechanism. The driving mechanism includes a ball screw that converts the rotational driving force of an injection servo motor into the driving force of the screw in the axial direction and transmits the driving force (for example, Patent Document 1).

[Prior Art Document]

[Patent Document]

[Patent Document 1] Japanese Patent Laid-Open Publication No. 2019-166702

[Summary of Invention]

[Problems to be Solved by Invention]

Meanwhile, the scheduled inspection time of the ball screw is displayed on the basis of the usage conditions and usage time of the injection molding machine. However, the degree of damage to the ball screw differs depending on the injection molding machine even when the scheduled inspection time comes. As a result, the injection molding machine is rarely inspected even when the scheduled inspection time comes.

An object of the present invention is to provide a life estimation method, a life estimation device, and a computer program that can accumulate physical quantity data indicating a state of a predetermined part constituting an industrial machine and calculate a failure time or failure probability of the predetermined part.

[Means for Solving Problems]

According to an aspect of the present invention, there is provided a life estimation method including: acquiring physical quantity data indicating a state of a predetermined part constituting an industrial machine; storing the acquired physical quantity data and time data indicating an acquisition time of the physical quantity data in association with each other; calculating a function for estimating a parameter value correlated with a life of the predetermined part over time on the basis of the acquired physical quantity data and the time data; and calculating a failure time or a failure probability of the predetermined part using the calculated function.

According to another aspect of the present invention, there is provided a life estimation device including: an acquisition unit acquiring physical quantity data indicating a state of a predetermined part constituting an industrial machine; a storage unit storing the acquired physical quantity data and time data indicating an acquisition time of the physical quantity data in association with each other; and a calculation unit calculating a function for estimating a parameter value correlated with a life of the predetermined part over time on the basis of the acquired physical quantity data and the time data and calculating a failure time or a failure probability of the predetermined part using the calculated function.

According to still another aspect of the present invention, there is provided a computer program causing a computer to execute a process including: acquiring physical quantity data indicating a state of a predetermined part constituting an industrial machine; storing the acquired physical quantity data and time data indicating an acquisition time of the physical quantity data in association with each other; calculating a function for estimating a parameter value correlated with a life of the predetermined part over time on the basis of the acquired physical quantity data and the time data; and calculating a failure time or a failure probability of the predetermined part using the calculated function.

[Effects of Invention]

According to the above, it is possible to accumulate physical quantity data indicating the state of a predetermined part constituting an industrial machine and to calculate the failure timing or failure probability of the predetermined part.

[Brief Description of Drawings]

FIG. 1 is a schematic diagram illustrating an example of a configuration of an injection molding machine according to Embodiment 1.
FIG. 2 is a cross-sectional view illustrating an example of a configuration of a driving device of the injection molding machine according to Embodiment 1.
FIG. 3 is a flowchart illustrating a processing procedure of a calculation unit according to Embodiment 1.
FIG. 4 is an explanatory diagram illustrating a method for calculating a function for estimating a change in a peak value of vibration acceleration correlated with a life of a ball screw over time.
FIG. 5A is an explanatory diagram illustrating a method for calculating a failure probability and failure time during the life of the ball screw.

FIG. 5B is an explanatory diagram illustrating the method for calculating the failure probability and failure time during the life of the ball screw.

FIG. 6 is a schematic diagram illustrating an example of an estimation result display screen.

FIG. 7 is a flowchart illustrating a processing procedure of a calculation unit according to Embodiment 2.

FIG. 8 is a schematic diagram illustrating an example of a configuration of a control device according to Embodiment 3.

[Mode for Carrying out Invention]

Hereinafter, specific examples of an injection molding machine (life estimation device), a life estimation method, and a computer program according to embodiments of the present invention will be described with reference to the drawings. At least some of the embodiments described below may be combined arbitrarily. In addition, the present invention is not limited to these examples, but is indicated by the claims. The present invention is intended to include all changes within the meaning and range equivalent to the claims.

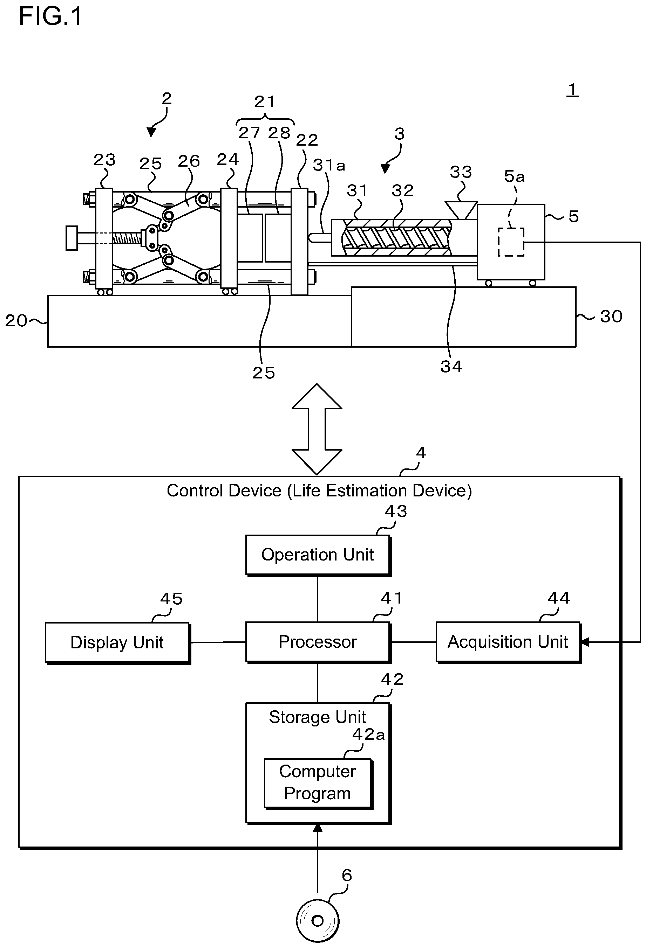

FIG. 1 is a schematic diagram illustrating an example of a configuration of an injection molding machine 1 according to Embodiment 1. The injection molding machine 1 according to Embodiment 1 includes a mold clamping device 2 that clamps a mold 21, an injection device 3 that melts and injects a molding material, and a control device 4. The control device 4 functions as a life estimation device according to Embodiment 1.

The mold clamping device 2 includes a fixed platen 22 that is fixed on a bed 20, a mold clamping housing 23 that is provided to be slidable on the bed 20, and a movable platen 24 that similarly slides on the bed 20. The fixed platen 22 and the mold clamping housing 23 are connected by a plurality of tie bars, for example, four tie bars 25. The movable platen 24 is configured to be slidable between the fixed platen 22 and the mold clamping housing 23. A mold clamping mechanism 26 is provided between the mold clamping housing 23 and the movable platen 24. The mold clamping mechanism 26 is configured as, for example, a toggle mechanism. Further, the mold clamping mechanism 26 may be configured by a direct-pressure-type mold clamping mechanism, that is, a mold clamping cylinder. A fixed mold 28 and a movable mold 27 are provided in the fixed platen 22 and the movable platen 24, respectively. When the mold clamping mechanism 26 is driven, the mold 21 is opened and closed.

The injection device 3 is provided on a base 30. The injection device 3 includes a heating cylinder 31 that has a nozzle 31a at its tip and a screw 32 that is disposed in the heating cylinder 31 so as to be rotatable in a circumferential direction and an axial direction. A heater for melting the molding material is provided inside the heating cylinder 31 or on the outer periphery of the heating cylinder 31. The screw 32 is driven by the driving device 5 in a rotational direction and the axial direction.

A hopper 33 into which the molding material is put is provided in the vicinity of a rear end potion of the heating cylinder 31. In addition, the injection molding machine 1 includes a nozzle touch device 34 that moves the injection device 3 in a front-rear direction (a left-right direction in FIG. 1). When the nozzle touch device 34 is driven, the injection device 3 moves forward and the nozzle 31a of the heating cylinder 31 touches a close contact portion of the fixed platen 22.

The control device 4 is a computer that controls the operations of the mold clamping device 2 and the injection device 3 and includes, for example, a processor (calculation unit) 41, a storage unit 42, an operation unit 43, an acquisition unit 44, and a display unit 45 as a hardware configuration. In addition, the control device 4 may be a server device that is connected to a network. Further, the control device 4 may be configured by a plurality of computers to perform distributed processing, may be implemented by a plurality of virtual machines installed in one server, or may be implemented using a cloud server.

The processor 41 includes arithmetic circuits, such as a central processing unit (CPU), a multi-core CPU, a graphics processing unit (GPU), general-purpose computing on graphics processing units (GPGPU), a tensor processing unit (TPU), an application specific integrated circuit (ASIC), a field-programmable gate array (FPGA), and a neural processing unit (NPU), internal storage devices, such as a read only memory (ROM) and a random access memory (RAM), I/O terminals, a timer, and the like. The processor 41 executes a computer program (program product) 42a stored in the storage unit 42, which will be described below, to implement a control method according to Embodiment 1.

The storage unit 42 is a non-volatile memory such as a hard disk, an electrically erasable programmable ROM (EEPROM), or a flash memory. The storage unit 42 stores a computer program 42a for causing a computer to execute a process of calculating the failure time and failure probability of a ball screw 51.

The computer program 42a according to Embodiment 1 may be recorded on a recording medium 6 in a computer-readable manner. The storage unit 42 stores the computer program 42a read from the recording medium 6 by a reading device. The recording medium 6 is a semiconductor memory such as a flash memory. Further, the recording medium 6 may be an optical disc such as a compact disc (CD)-ROM, a digital versatile disc (DVD)-ROM, or a Blu-ray (registered trademark) disc (BD). Furthermore, the recording medium 6 may be a flexible disk, a magnetic disk, such as a hard disk, a magneto-optical disk, or the like. Moreover, the computer program 42a according to Embodiment 1 may be downloaded from an external server that is connected to a communication network and then stored in the storage unit 42.

The operation unit 43 is an input device such as a touch panel, a soft key, a hard key, a keyboard, or a mouse.

The acquisition unit 44 performs AD conversion on a rotation angle signal output from an encoder 50d, which will be described below, and an acceleration signal output from an acceleration sensor 5a and acquires rotation angle data and acceleration data.

The display unit 45 is a liquid crystal panel, an organic EL display, electronic paper, a plasma display, or the like. The display unit 45 displays various types of information corresponding to the image data given from the processor 41.

Setting values for determining molding conditions, such as an injection start time point, resin temperature in the mold, nozzle temperature, cylinder temperature, hopper temperature, mold clamping force, an injection speed, injection acceleration, injection peak pressure, and an injection stroke, are set in the injection molding machine 1. In addition, setting values for determining molding conditions, such as cylinder tip resin pressure, a reverse prevention ring seating state, holding pressure switching pressure, a holding pressure switching speed, a holding pressure switching position, a holding pressure completion position, a cushion position, metering back pressure, and metering torque, are set in the injection molding machine 1. Further, setting values for determining molding conditions, such as a metering completion position, a retraction speed of the screw 32, cycle time, mold closing time, injection time, holding pressure time, metering time, and mold opening time, are set in the injection molding machine 1. Then, the injection molding machine 1 in which these setting values have been set operates according to the setting values.

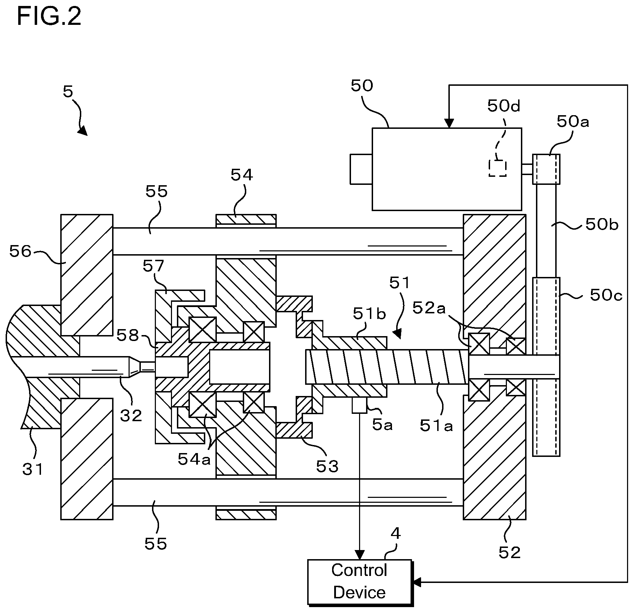

FIG. 2 is a cross-sectional view illustrating an example of a configuration of the driving device 5 of the injection molding machine 1 according to Embodiment 1. The driving device 5 includes an injection servo motor 50 and the ball screw 51 for driving the screw 32 in the axial direction. The injection servo motor 50 is provided with the encoder 50d that detects a rotation angle and outputs a rotation angle signal indicating the rotation angle to the control device 4. The control device 4 controls the rotation of the injection servo motor 50 on the basis of the rotation angle signal output from the encoder 50d. A small pulley 50a is provided on an output shaft of the injection servo motor 50.

The ball screw 51 includes a ball screw shaft 51a and a nut 51b that is fitted to the ball screw shaft 51a. A base end portion of the ball screw shaft 51a is rotatably supported by a first plate 52 via a bearing 52a, the first plate 52 having a hole portion and a bearing seat. A large pulley 50c is provided in the base end portion of the ball screw shaft 51a. The small pulley 50a and the large pulley 50c are connected by a timing belt 50b, and the rotational force of the small pulley 50a is transmitted to the large pulley 50c at a reduced speed such that the ball screw shaft 51a is rotated.

Hereinafter, a direction (the right side in FIG. 1) toward the base end portion of the ball screw shaft 51a is referred to as a backward direction, and a direction (the left direction in FIG. 1) opposite thereto is referred to as a forward direction. Further, the forward direction and the backward direction are collectively referred to as a forward and backward direction. When the injection servo motor 50 is driven to rotate the large pulley 50c and the ball screw shaft 51a, the nut 51b is moved in the forward direction and the backward direction according to the direction of the rotation.

A load cell 53 is provided on a forward-direction-side surface of the nut 51b, and a forward-direction-side surface of the load cell 53 is fixed to a second plate 54. A plurality of through holes are formed in the second plate 54, and guide shafts 55 are inserted into the through holes. The second plate 54 is guided by the guide shafts 55 and is moved in the forward and backward direction. A third plate 56 is provided on a forward-direction side of the first plate 52, and one end portion and the other end portion of the guide shaft 55 are supported by the first plate 52 and the third plate 56, respectively. When the ball screw shaft 51a is rotated, the nut 51b, the load cell 53, and the second plate 54 are moved integrally along the guide shaft 55 in the forward and backward direction.

The second plate 54 is provided with a hole portion and a bearing seat, and an output shaft 58 is supported by the hole portion via a bearing 54a. A plasticizing pulley 57 is provided on the output shaft 58. The plasticizing pulley 57 is connected to a pulley that is attached to a motor (not illustrated) for rotating the screw 32 through a timing belt (not illustrated). A rotation center of the output shaft 58 is matched with a rotation center of the ball screw shaft 51a. A recessed portion into which the tip of the ball screw shaft 51a is inserted when the nut 51b is moved forward or backward is formed in the output shaft 58. In addition, one end of the screw 32 is fixed to the output shaft 58 such that the central axes thereof are matched with each other. A through hole through which the screw 32 is inserted is formed in the third plate 56. One end of the heating cylinder 31 is fixed to the third plate 56 such that the screw 32 inserted through the through hole of the third plate 56 can be moved in the heating cylinder 31 in the axial direction.

Further, the acceleration sensor 5a that detects the vibration of the nut 51b is attached to the nut 5 1b of the ball screw 51. The acceleration sensor 5a outputs the detected acceleration signal to the control device 4. The processor 41 of the control device 4 performs AD conversion on the acceleration signal output from the acceleration sensor 5a to acquire acceleration data, using the acquisition unit 44. The control device 4 can estimate the life of the ball screw 51 on the basis of the acceleration data.

An outline of a molding process cycle is as follows, and the control device 4 performs a process of sequentially moving a forward and backward movement range of the nut 51b in the repeated molding process cycle. During injection molding, a mold closing process, a mold clamping process, an injection unit advancement process, an injection process, a metering process, an injection unit retraction process, a mold opening process, and an ejection process that are well known are sequentially performed.

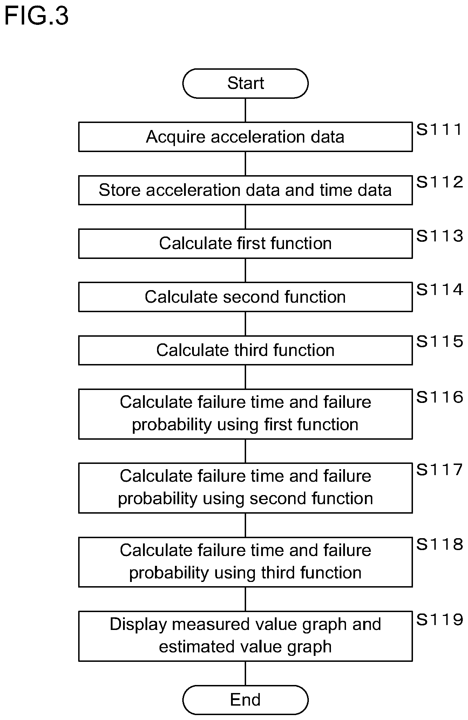

FIG. 3 is a flowchart illustrating a processing procedure of the processor 41 according to Embodiment 1. The processor 41 acquires acceleration data indicating the state of the ball screw 51 from the acceleration sensor 5a through the acquisition unit 44 (Step S111).

Then, the calculation unit stores the acquired acceleration data and time data indicating the time when the acceleration data was acquired in the storage unit 42 in association with each other (Step S1 12). The time data is obtained from a timer.

Then, the calculation unit calculates a first function for estimating a change in an acceleration peak value correlated with the life of the ball screw 51 over time on the basis of the acceleration data and the time data stored in the storage unit 42 (Step S113). The acceleration peak value is an example of a parameter value correlated with the life of the ball screw 51.

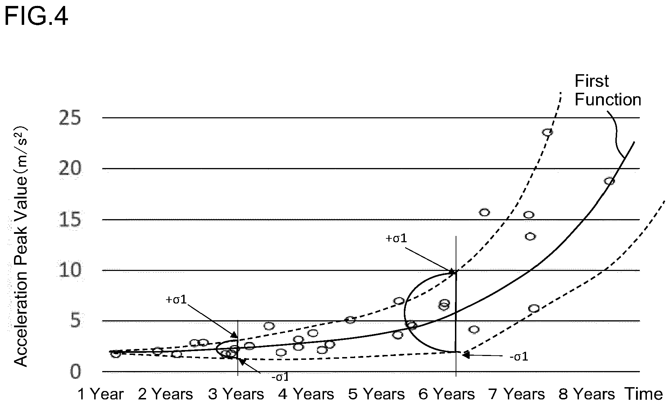

FIG. 4 is an explanatory diagram illustrating a method for calculating a function for estimating a change in a vibration acceleration peak value correlated with the life of the ball screw 51 over time. In a graph illustrated in FIG. 4, a horizontal axis indicates time, and a vertical axis indicates the acceleration peak value. The time on the horizontal axis corresponds to the operating time of the ball screw 51, and the acceleration peak value corresponds to the degree of failure of the ball screw 51. The processor 41 calculates the first function for estimating the change in the acceleration peak value over time, using a maximum likelihood estimation method, on the basis of the acceleration data and the time data accumulated in the storage unit 42 over a predetermined period.

For example, the first function is represented by the following expression:

$$P = a \times e^{bt} + c \ldots (1)$$

where

P: acceleration peak value
t: time
a, b, and c: coefficient.

The processor 41 calculates the coefficients a, b, and c at which a mean squared error is minimized to calculate the first function.

Then, as represented by a broken line in FIG. 4, the processor 41 calculates a second function for estimating a change in a value obtained by adding a standard deviation (predetermined deviation) of a normal distribution to the acceleration peak value calculated using the first function over time (Step S1 14). Specifically, the processor 41 calculates the standard deviation at each of a plurality of time points on the basis of the acceleration peak value (average value) calculated using the first function at a plurality of time points, and the acceleration data and the time data as sample data stored in the storage unit 42. Then, the processor 41 calculates a value obtained by adding the standard deviation at each time point to each acceleration peak value (average value) at each time point. Then, the processor 41 calculates the second function indicating a change in the calculated value over time using the maximum likelihood estimation method. The second function is also expressed using the exponential function represented by the above-described Expression (1).

Furthermore, the processor 41 calculates a third function for estimating changes in values obtained by subtracting the standard deviation of the normal distribution from parameter values at a plurality of time points over time (Step S115). A method for calculating the third function is the same as the method for calculating the second function.

Next, the processor 41 calculates the failure time and failure probability of the ball screw 51 using the first function (Step S116). Similarly, the processor 41 calculates the failure time and failure probability of the ball screw 51 using the second function (Step S117). Further, the processor 41 calculates the failure time and failure probability of the ball screw 51 using the third function (Step S118).

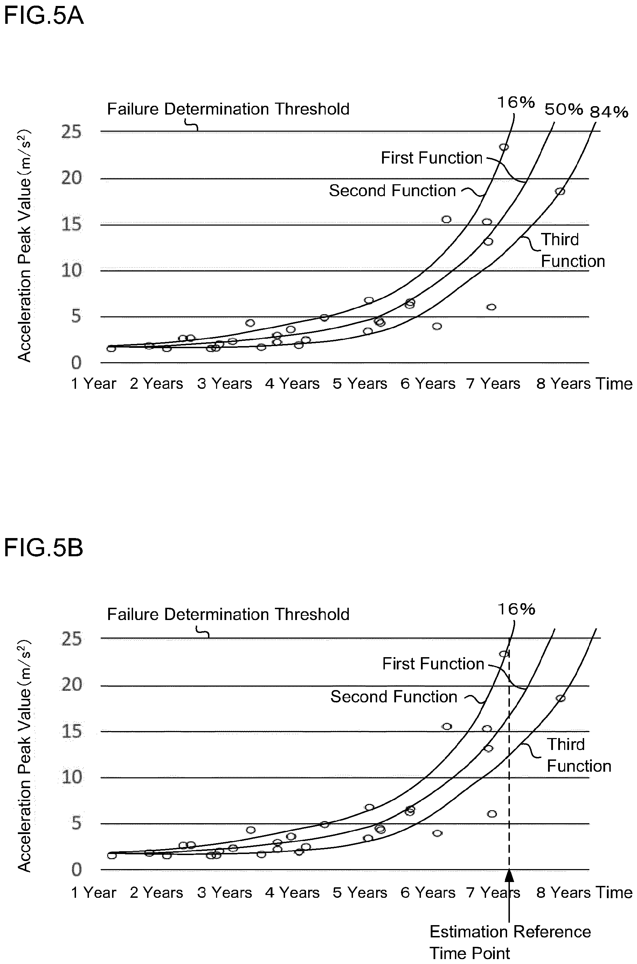

FIGS. 5A and 5B are explanatory diagrams illustrating a method for calculating the failure probability and the failure time during the life of the ball screw 51. For example, as illustrated in FIG. 5A, the processor 41 calculates the time point when the acceleration peak value calculated using the first function reaches a predetermined failure determination threshold value as the failure time when the failure probability is 50% (first probability). The failure determination threshold value may be stored in the storage unit 42 in advance, or a configuration may be adopted in which the processor 41 receives the failure determination threshold value input by an operator through the operation unit 43.

In addition, the processor 41 calculates the time point when the acceleration peak value calculated using the second function reaches the predetermined failure determination threshold value as the failure time when the failure probability is 16% (second probability).

Further, the processor 41 calculates the time point when the acceleration peak value calculated using the third function reaches the predetermined failure determination threshold value as the failure time when the failure probability is 84% (third probability).

Furthermore, the example in which the failure time is estimated from the intersection points of the first function, the second function, and the third function and the failure determination threshold value has been described above. However, as illustrated in FIG. 5B, a configuration may be adopted in which the failure probability at a specific estimation reference time point is calculated. The processor 41 may calculate the acceleration peak value (average value) at a specific estimation reference time point using the first function. Then, the processor 41 may calculate a variance or a standard deviation at the estimation reference time point on the basis of the average value of the acceleration peak values, and the acceleration data and the time data as samples stored in the storage unit 42 and calculate the probability that the acceleration peak value will be the failure determination threshold value at the estimation reference time point. That is, assuming that the acceleration peak value follows the normal distribution at the estimation reference time point, the probability that the acceleration peak value will be the failure determination threshold value may be calculated.

Then, the processor 41 displays, for example, a measured value graph 45a and estimated value graphs 45b, 45c, and 45d on the display unit 45 (Step S 119) and ends the process.

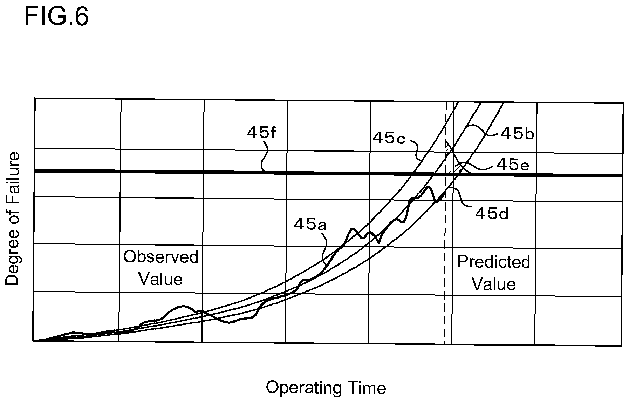

FIG. 6 is a schematic diagram illustrating an example of an estimation result display screen. The processor 41 displays a horizontal axis and a vertical axis of a graph on the display unit 45 and displays graph lines of the measured value graph 45a and the estimated value graphs 45b, 45c, and 45d.

The horizontal axis indicates the operating time corresponding to the time elapsed, and the vertical axis indicates the degree of failure corresponding to the acceleration peak value. The measured value graph 45a is a graph illustrating the measured value of a change in the acceleration peak value over time which is based on the acceleration data and the time data stored in the storage unit 42. The estimated value graphs 45b, 45c, and 45d are graphs illustrating changes in the acceleration peak values calculated by the first function, the second function, and the third function over time, respectively.

Further, the processor 41 displays a threshold value line image 45f showing the failure determination threshold value on the display unit 45. Furthermore, the processor 41 displays a normal distribution image 45e showing the time elapsed from the current time and the failure probability of the ball screw 51.

The operator of the injection molding machine 1 can visually recognize the current actual state, failure time, and failure probability of the ball screw 51 from the measured value graph 45a and the estimated value graphs 45b, 45c, and 45d displayed on the display unit 45.

As described above, according to the injection molding machine 1 of Embodiment 1, it is possible to accumulate the acceleration data indicating the state of the ball screw 51 of the injection molding machine 1 and to calculate the failure time and failure probability of the ball screw 51.

Specifically, it is possible to calculate the first function indicating the relationship between time and the acceleration peak value using the maximum likelihood estimation method and to calculate the time point when the acceleration peak value calculated using the first function reaches the predetermined failure determination threshold value as the failure time when the failure probability is 50%.

In addition, it is possible to calculate the time point when the acceleration peak value calculated using the second function reaches the predetermined failure determination threshold value as the failure time when the failure probability is 16%.

Further, it is possible to calculate the time point when the acceleration peak value calculated using the third function reaches the predetermined failure determination threshold value as the failure time when the failure probability is 84%.

Furthermore, it is possible to display the current state of the ball screw 51 using the measured value graph 45a and the estimated value graphs 45b, 45c, and 45d.

In addition, in Embodiment 1, the example has been described in which the failure time and failure probability of the ball screw 51 are estimated on the basis of the vibration of the ball screw 51. However, physical quantity data indicating the current or torque of the injection servo motor 50 may be used. The processor 41 may calculate a function indicating a change in the peak value of the current or torque over time on the basis of the physical quantity data indicating the current or torque of the injection servo motor 50 and calculate the failure time and failure probability of the ball screw 51 using the same method as that in Embodiment 1. Further, a configuration may be adopted in which the failure time and failure probability of the ball screw 51 are calculated on the basis of the concentration of iron powder included in a lubricant for the ball screw 51.

Furthermore, in Embodiment 1, the example has been described in which the failure time and failure probability of the ball screw 51 are calculated. However, a configuration may be adopted in which the failure time and failure probability of the mold clamping device 2 and the injection device 3 are calculated.

Moreover, a configuration may be adopted in which physical quantity data indicating the state of a predetermined part constituting an industrial machine is acquired and the failure time and failure probability of the predetermined part are calculated.

In addition, in Embodiment 1, the second function and the third function for estimating the values obtained by adding and subtracting the standard deviation from the average value of the acceleration peak values are given as an example. However, the present invention is not limited thereto. A configuration may be adopted in which a function for estimating a value obtained by adding or subtracting any predetermined deviation to or from the average value of the acceleration peak values is calculated and the failure time and the failure probability are estimated using the function.

(Embodiment 2)

An injection molding machine 1 according to Embodiment 2 differs from the injection molding machine according to Embodiment 1 in that the failure time and failure probability are calculated for each part of the ball screw shaft 51a. Since the other configurations of the injection molding machine 1 are the same as those of the injection molding machine 1 according to Embodiment 1, the same portions are denoted by the same reference numerals, and a detailed description thereof will be omitted.

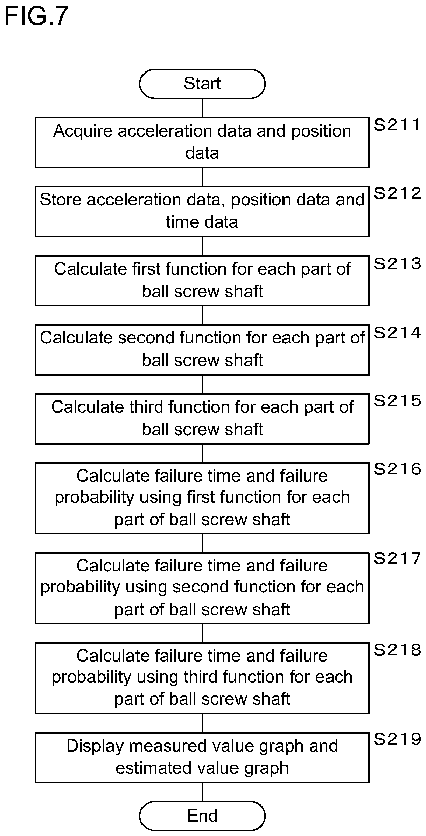

FIG. 7 is a flowchart illustrating a processing procedure of a calculation unit according to Embodiment 2. The processor 41 acquires acceleration data indicating the state of the ball screw 51 from the acceleration sensor 5a through the acquisition unit 44 (Step S211). In addition, the processor 41 acquires angle data, in other words, position data indicating the position of the nut 51b from the encoder 50d through the acquisition unit 44 (Step S211). The rotation angle of the injection servo motor 50 corresponds to the position of the nut 51b on the ball screw shaft 51a.

Then, the calculation unit stores the acquired acceleration data, the acquired position data, and time data indicating the time when the acceleration data and the position data were acquired in the storage unit 42 in association with one another (Step S212). The time data is obtained from the timer.

Then, the calculation unit calculates the first function for estimating a change in the acceleration peak value correlated with the life of the ball screw 51 over time for each part of the ball screw shaft 51a on the basis of the acceleration data, the position data, and the time data stored in the storage unit 42 (Step S213).

Then, the processor 41 calculates the second function for estimating a change in the value obtained by adding the standard deviation of the normal distribution to the acceleration peak value calculated using the first function over time for each part of the ball screw shaft 51a (Step S214).

Further, the processor 41 calculates the third function for estimating changes in the values obtained by subtracting the standard deviation of the normal distribution from the parameter values at a plurality of time points over time for each part of the ball screw shaft 51a (Step S215).

In addition, a method for calculating the first to third functions is the same as that in Embodiment 1.

Then, the processor 41 calculates the failure time and failure probability of the ball screw 51 for each part of the ball screw shaft 51a using the first function (Step S216). Similarly, the processor 41 calculates the failure time and failure probability of the ball screw 51 for each part of the ball screw shaft 51a using the second function (Step S217). In addition, the processor 41 calculates the failure time and failure probability of the ball screw 51 for each part of the ball screw shaft 51a using the third function (Step S218).

Further, a method for calculating the failure time and the failure probability using the first to third functions is the same as that in Embodiment 1.

Then, the processor 41 displays, for example, the measured value graph 45a and the estimated value graphs 45b, 45c, and 45d on the display unit 45 (Step S219) and ends the process.

According to the injection molding machine 1 of Embodiment 2, it is possible to accumulate the acceleration data indicating the state of the ball screw 51 of the injection molding machine 1 and to calculate the failure time and failure probability of the ball screw 51 for each part of the ball screw shaft 51a.

(Embodiment 3)

An injection molding machine 1 according to Embodiment 3 differs from the injection molding machine according to Embodiment 1 in that the failure time and failure probability of the ball screw shaft 51a are calculated by machine learning. Since the other configurations of the injection molding machine 1 are the same as those of the injection molding machine 1 according to Embodiment 1, the same portions are denoted by the same reference numerals, and a detailed description thereof will be omitted.

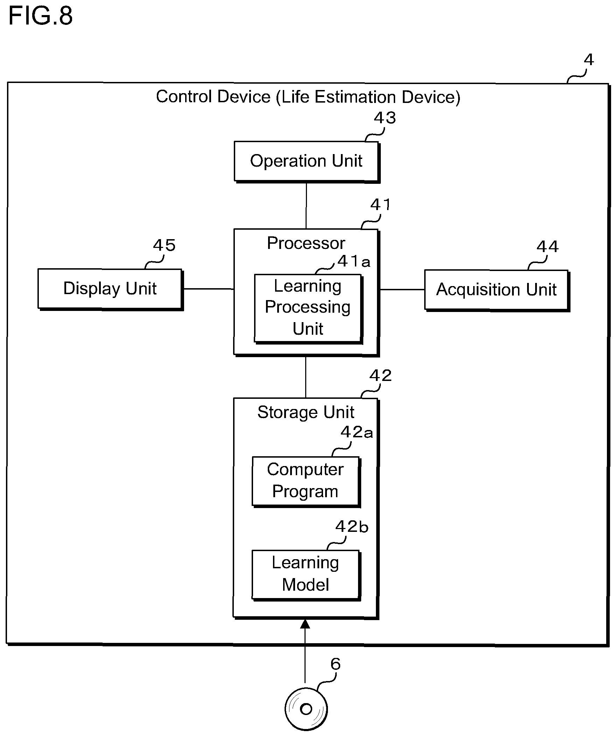

FIG. 8 is a schematic diagram illustrating an example of a configuration of a control device 4 according to Embodiment 3. A processor 41 of the control device 4 according to Embodiment 3 includes a learning processing unit 41a as a functional unit. In addition, the storage unit 42 stores a learning model 42b for estimating the failure time and failure probability of the ball screw 51. Further, the learning processing unit 41a may be implemented by software or may be configured by hardware. Further, a portion of the learning processing unit 41a may be configured by hardware.

The processor 41 reads the learning model 42b and the computer program 42a from the storage unit 42 and executes them.

The learning model 42b is a neural network that outputs a failure probability in a case where a peak value of vibration acceleration and the elapsed time, which is the operating time of the ball screw 51, are input. The learning model 42b includes an input layer, a hidden layer, and an output layer. The input layer has a plurality of nodes to which the peak value of the vibration acceleration and the elapsed time are input. The hidden layer includes a plurality of middle layers each having a plurality of nodes, and the nodes of the middle layer on the input side are connected to the nodes of the input layer. The output layer has nodes that output failure probabilities. Each node of the output layer is connected to the node of the middle layer on the output side.

The learning model 42b can be generated by performing machine learning using training data including the peak value of the vibration acceleration, the elapsed time, and the failure probability. For example, the learning processing unit 41a of the processor 41 performs machine learning on the learning model 42b by optimizing weighting coefficients of the learning model 42b with an error backpropagation, an error gradient descent method, or the like using training data.

In addition, the learning model 42b may be configured such that the output layer includes nodes corresponding to a plurality of elapsed times and the failure probabilities are output from the nodes corresponding to each elapsed time in a case where when the peak value of the vibration acceleration is input.

The processor 41 can input the peak value of the vibration acceleration detected at the current time and any elapsed time to the learning model 42b to calculate the failure probability of the ball screw 51. The processor 41 may display the measured value graph 45a and the estimated value graphs 45b, 45c, and 45d on the display unit 45 in the same manner as in Embodiment 1, using the relationship between the elapsed time and the failure probability calculated using the learning model 42b.

According to the injection molding machine 1 of Embodiment 3, as in Embodiment 1, it is possible to calculate the failure time and failure probability of the ball screw 51 and to display the measured value graph 45a and the estimated value graphs 45b, 45c, and 45d on the display unit 45.

In addition, in Embodiment 3, the learning model 42b using the neural network has been described. However, a configuration may be adopted in which the failure time and the failure probability are estimated using other known machine learning models such as a support vector machine (SVM) and a Bayesian network.

[Description of Reference Numerals]

1      Injection molding machine
2      Mold clamping device
3      Injection device
4      Control device
5      Driving device
5a     Acceleration sensor
6      Recording medium
31     Heating cylinder
32     Screw
50     Injection servo motor
50d    Encoder
51     Ball screw
41     Processor
51     Ball screw
51a    Ball screw shaft
51b    Nut

**Claims**

1. A life estimation method comprising:

   acquiring physical quantity data indicating a state of a predetermined part constituting an industrial machine;
   storing the acquired physical quantity data and time data indicating an acquisition time of the physical quantity data in association with each other;
   calculating a function for estimating a parameter value correlated with a life of the predetermined part over time on the basis of the acquired physical quantity data and the time data; and
   calculating a failure time or a failure probability of the predetermined part using the calculated function.

2. The life estimation method according to claim 1, wherein a time point when the parameter value calculated using the function reaches a failure determination threshold value is the failure time.

3. The life estimation method according to claim 2, wherein a time point when the parameter value calculated using the function reaches the failure determination threshold value is the failure time when the failure probability is 50%, the function being calculated using a maximum likelihood estimation method.

4. The life estimation method according to claim 2, wherein a first function for estimating a change in the parameter value over time is calculated using a maximum likelihood estimation method,

   a second function for estimating a value obtained by adding a predetermined deviation to the parameter value calculated using the first function over time is calculated,
   a third function for estimating a value obtained by subtracting the predetermined deviation from the parameter value calculated using the first function over time is calculated,
   a time point when the parameter value calculated using the first function reaches the failure determination threshold value is the failure time when the failure probability is a first probability,
   a time point when the parameter value calculated using the second function reaches the failure determination threshold value is the failure time when the failure probability is a second probability, and
   a time point when the parameter value calculated using the third function reaches the failure determination threshold value is the failure time when the failure probability is a third probability.

**5.** The life estimation method according to claim 4, wherein a measured value graph showing the change in the parameter value over time based on the physical quantity data and the time data, estimated value graphs showing the first function, the second function, and the third function, and the failure determination threshold value are displayed.

**6.** The life estimation method according to any one of claims 1 to 5, wherein the industrial machine is a molding machine having a ball screw, and
the failure time or the failure probability of the ball screw is calculated.

**7.** The life estimation method according to claim 6, wherein the physical quantity data is data indicating vibration acceleration of the ball screw and a current or torque of a motor driving the ball screw, and
the parameter value is a peak value of the vibration acceleration, the current, or the torque.

**8.** The life estimation method according to claim 7, wherein the molding machine includes a screw that is provided in a cylinder having a nozzle at its tip so as to be driven in a rotational direction and an axial direction,

the ball screw has a ball screw shaft provided to be rotatable and a nut that is fitted to the ball screw shaft and is moved forward and backward with rotation of the ball screw shaft,
the screw is driven in the axial direction by the backward and forward movement of the nut, and
the life estimation method comprises
acquiring position data indicating a position of the nut with respect to the ball screw and the physical quantity data indicating the state of the ball screw at the position;
storing the acquired position data, the acquired physical quantity data, and the time data indicating the acquisition time of the physical quantity data in association with one another; and
calculating the function for estimating the change in the parameter value correlated with the life of the ball screw over time for each part of the ball screw shaft on the basis of the acquired position data, the acquired physical quantity data, and the time data.

**9.** A life estimation device comprising:

an acquisition unit acquiring physical quantity data indicating a state of a predetermined part constituting an industrial machine;
a storage unit storing the acquired physical quantity data and time data indicating an acquisition time of the physical quantity data in association with each other; and

a calculation unit calculating a function for estimating a parameter value correlated with a life of the predetermined part over time on the basis of the acquired physical quantity data and the time data and calculating a failure time or a failure probability of the predetermined part using the calculated function.

**10.** A computer program causing a computer to execute a process comprising:

acquiring physical quantity data indicating a state of a predetermined part constituting an industrial machine;
storing the acquired physical quantity data and time data indicating an acquisition time of the physical quantity data in association with each other;
calculating a function for estimating a parameter value correlated with a life of the predetermined part over time on the basis of the acquired physical quantity data and the time data; and
calculating a failure time or a failure probability of the predetermined part using the calculated function.

# FIG.1

Control Device (Life Estimation Device) 4

Operation Unit 43

Display Unit 45

Processor 41

Acquisition Unit 44

Storage Unit 42

Computer Program 42a

FIG.2

# FIG.3

Start

| | |
|---|---|
| Acquire acceleration data | S111 |
| Store acceleration data and time data | S112 |
| Calculate first function | S113 |
| Calculate second function | S114 |
| Calculate third function | S115 |
| Calculate failure time and failure probability using first function | S116 |
| Calculate failure time and failure probability using second function | S117 |
| Calculate failure time and failure probability using third function | S118 |
| Display measured value graph and estimated value graph | S119 |

End

FIG.4

## FIG.5A

## FIG.5B

FIG.6

# FIG.7

```
        ┌──────────┐
        │  Start   │
        └──────────┘
             │
┌──────────────────────────────────┐  S211
│ Acquire acceleration data and     │
│ position data                     │
└──────────────────────────────────┘
             │
┌──────────────────────────────────┐  S212
│ Store acceleration data, position │
│ data and time data                │
└──────────────────────────────────┘
             │
┌──────────────────────────────────┐  S213
│ Calculate first function for each │
│ part of ball screw shaft          │
└──────────────────────────────────┘
             │
┌──────────────────────────────────┐  S214
│ Calculate second function for     │
│ each part of ball screw shaft     │
└──────────────────────────────────┘
             │
┌──────────────────────────────────┐  S215
│ Calculate third function for each │
│ part of ball screw shaft          │
└──────────────────────────────────┘
             │
┌──────────────────────────────────┐  S216
│ Calculate failure time and        │
│ failure probability using first   │
│ function for each part of ball    │
│ screw shaft                       │
└──────────────────────────────────┘
             │
┌──────────────────────────────────┐  S217
│ Calculate failure time and        │
│ failure probability using second  │
│ function for each part of ball    │
│ screw shaft                       │
└──────────────────────────────────┘
             │
┌──────────────────────────────────┐  S218
│ Calculate failure time and        │
│ failure probability using third   │
│ function for each part of ball    │
│ screw shaft                       │
└──────────────────────────────────┘
             │
┌──────────────────────────────────┐  S219
│ Display measured value graph and  │
│ estimated value graph             │
└──────────────────────────────────┘
             │
        ┌──────────┐
        │   End    │
        └──────────┘
```

# FIG.8

## INTERNATIONAL SEARCH REPORT

| International application No. |
|---|
| **PCT/JP2022/022706** |

| A. | CLASSIFICATION OF SUBJECT MATTER |
|---|---|

*B29C 45/76*(2006.01)i
FI: B29C45/76

According to International Patent Classification (IPC) or to both national classification and IPC

| B. | FIELDS SEARCHED |
|---|---|

Minimum documentation searched (classification system followed by classification symbols)

B29C45/00-45/84; G01M13/00-13/045; F16H19/00-49/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-74918 A (JAPAN STEEL WORKS LTD) 20 May 2021 (2021-05-20) claims, paragraphs [0024]-[0091], fig. 15 | 1-2, 6, 9-10 |
| A | | 3-5, 7-8 |
| X | JP 2000-238106 A (TOSHIBA MACH CO LTD) 05 September 2000 (2000-09-05) claims, paragraphs [0012]-[0033] | 1-2, 6, 9-10 |
| A | | 3-5, 7-8 |
| X | WO 2020/136823 A1 (MITSUBISHI ELECTRIC CORP) 02 July 2020 (2020-07-02) claims, paragraphs [0018]-[0069], fig. 4, 9 | 1-2, 9-10 |
| A | | 3-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/022706**

| Patent document cited in search report | | | Publication date (day/month/year) | Patent family member(s) | Publication date (day/month/year) |
|---|---|---|---|---|---|
| JP | 2021-74918 | A | 20 May 2021 | WO 2021/090766 A1 claims, paragraphs [0024]-[0091], fig. 15 | |
| JP | 2000-238106 | A | 05 September 2000 | US 6332355 B1 claims, column 3, line 39 to column 6, line 50 | |
| WO | 2020/136823 | A1 | 02 July 2020 | (Family: none) | |

Form PCT/ISA/210 (patent family annex) (January 2015)

**EP 4 403 332 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166702 A